Europäisches Patentamt

European Patent Office

Office européen des brevets

(19)

(11) Publication number: **0 235 794 B1**

# EUROPEAN PATENT SPECIFICATION

(12)

(45) Date of publication of patent specification: **10.04.91**   (51) Int. Cl.⁵: **B29C 67/14**, B27N 3/10

(21) Application number: **87102980.7**

(22) Date of filing: **03.03.87**

(54) **Process for the continuous manufacture of thermo-mouldable thermoplastic composite materials.**

(30) Priority: **03.03.86 IT 1961086**

(43) Date of publication of application:
**09.09.87 Bulletin 87/37**

(45) Publication of the grant of the patent:
**10.04.91 Bulletin 91/15**

(84) Designated Contracting States:
**AT BE CH DE ES FR GB GR LI NL SE**

(56) References cited:
**EP-A- 0 046 526**
**DE-A- 1 956 038**
**DE-A- 2 206 829**
**DE-A- 2 948 235**

(73) Proprietor: **Montedison S.p.A.**
**31, Foro Buonaparte**
**I-20121 Milan(IT)**

(72) Inventor: **Bastioli, Catia**
**23, Via Rivolta**
**I-28100 Novara(IT)**
Inventor: **Del Tredici, Gianfranco**
**31, Via Sempione**
**I-21018 Sesto Calende Varese(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S. Schu-**
**bert, Dr. P. Barz Siegfriedstrasse 8**
**W-8000 München 40(DE)**

## Description

The present invention relates to a process for the continuous manufacture of thermo-mouldable thermoplastic composite materials. More particularly, the present invention relates to a process for the continuous manufacture of slabs from thermo-mouldable, thermoplastic composite materials reinforced with natural, artificial or synthetic fibers.

Some processes for preparing slabs from thermo-mouldable, thermoplastic composite material are already known in the art.

For instance, US-A-949 133 or DE-A-2 948 235 describe processes for preparing slabs from thermo-mouldable composite material obtained by inserting reinforcing layers between the sheets of previously extruded polymer. The panel thus obtained is compressed under heat in a manner such as to allow the molten polymer to penetrate the reinforcing structure.

The reinforcement generally comprises glass fibers and consists of small mats of chopped fibers or of small, mono-yarn mats of continuous fibers. In particular, said reinforcements have a random structure which is isotropic in the plane and show a plurality of cut or continuous filaments twisted into strands or dispersed in the form of mono-filaments and kept together by chemical binders or by means of needle quilting. Drawbacks of the above-mentioned processes are poor economy in that the reinforcement has to be prepared separately and then combined with the polymer matrix and the adverse hygienic environmental conditions owing to the pieces of glass filaments which are present in the needle-type structure.

As an alternative, other processes have been suggested such as, for example, those described in GB-A-1 010 043, FR-A-1 361 439 or US-A-3 396 142. According to these processes the powdered thermoplastic matrix is fed after the small fibrous mats have been prepared.

These processes also have drawbacks, from the hygienic point of view owing to the dust created by using polymeric powders and from the economic point of view in that the milling operation of the granules and the subsequent drying of the powders are very expensive.

Furthermore, the use of powdered polymers may cause an absorption of oxygen and moisture by the polymer itself, resulting in the problem of thermooxidative and hydrolytic degradation and, consequently, deterioration in the performance of the finished, manufactured article.

At least most of the above drawbacks also are associated with the process described in DE-A-1 956038, which process is characteri zed in that thermoplastic material in the form of powder and fibrous material are placed together onto a conveyor be lt and are passed through a heating zone wherein the thermoplasti c material is plastisized and formed under pressure, whereafter the formed slat or fi lm is cooled.

It has now been found that the above drawbacks may be overcome by a process which comprises simultaneously and separately feeding the granulated thermoplastic polymer and a reinforcement selected from natural, artificial or synthetic fibers to a conveyor be lt and embeddi ng and heating under pressure the structure thus obtained.

The process provides the opportunity of obtaining slabs which, during subsequent thermo-moulding operations, have filaments that can freely move one against the other and, therefore, are able to distribute uniformly without hindering the resin creep.

The process for the continuous manufacture of thermo-mouldable, thermoplastic composite materials of the present invention comprises:

(a) simultaneously and separately feeding a granulated thermoplastic polymer in the form of granules having a height or diameter of from 2 to 10 mm and a reinforcement selected from organic or inorganic fibers onto a conveyor belt to obtain a continuous felt;

(b) beating and/or pressing the continuous felt thus obtained to reduce its thickness;

(c) compressing and gradually heating under pressure the continuous felt in order to melt the polymer matrix; and

(d) cooling the system thus obtained under pressure.

An alternative of the process of the present invention consists of preceding steps (a) and/or (c) by depositing on the conveyor belt and/or on the compressed structure, respectively, a film of the same type of polymer.

This alternative may be carried out when the preparation of a thermo-mouldable slab is required which has an improved surface finish or in order to improve the detachment from the surfaces of the continuous pressing system (c) by introducing into the two films suitable detaching additives.

According to a further alternative of the process of the present invention, in particular, if there is a necessity to keep a part of the polymer in the upper surface of the structure or to remove traces of moisture that may be present before step (b), it is possible to carry out a pre-heating of the composite material, for instance, by means of IR lamps, at a temperature near the softening point of the polymer.

The organic or inorganic fibers used in the present process may be continuous or chopped fibers. In the case of chopped fibers, the optionally present cutter must, with respect to the conveyor belt, be positioned at a height of at least 80 cm in a way so as to obtain a distribution in free and uniform fall across the complete width of the conveyor belt.

The fibers and the granulated polymer are fed separately through at least one dosage distribution system. When several dosage distribution systems are used, a corresponding number of (b) operations is carried out, one for each fiber and polymer feeding.

The beating operation has the purpose of enhancing the penetration of the polymer into the reinforcing structure but it also serves to disperse, as much as possible, the multi-filament forming the reinforcing structure into single mono-filaments.

The beating operation may be carried out by means of rigid metal blades or by means of a needle board system such as the quilting operation. The beating system may act on one or on both surfaces of the reinforcing structure.

The compression, carried out by means of accompanying calenders, lowers the thickness of the reinforcing felt and its porosity. These operations can be indispensable to obtaining a good quality of the finished slab, especially, if a first fiber polymer distribution zone is followed by other zones. It is to be understood that beating and compression are optional and complementary operations, their simultaneous or single insertion being only dependent on the necessity of the process.

In step (c) the working temperature generally is at least 30 to 50°C higher than the melting temperature, whereas the pressure must be sufficient to ensure the penetration of the molten polymer into the reinforcement.

Generally, the pressure melting of the material occurs by means of a continuous press provided with superimposed steel belts. In said press graduated heating zones are provided to allow the matrix to melt and a cooling zone is provided as well.

In respect of the total weight of the composite material, the fibers which form the reinforcing structure generally make up 10 to 60%.

Any organic or inorganic fiber may be used for performing the process of the present invention. Examples of suitable fibers are glass fibers, rock fibers, carbon fibers and aramide fibers, glass fibers being preferred.

Generally, the glass fibers used to form the reinforcing structure consist of continuous multi-filament or, if chopped, of staples having a length of more than 1 cm, preferably in the range of from 5 to 25 cm. Single fibers have a titre comprised between 5 and 300 tex, preferably between 5 and 25 tex, and may come directly from the cops or from rovings obtained by joining together a number of multi-filaments, each having a titre of between 100 and 3600 tex.

The number of filaments of the multi-filaments generally varies from 10 to 1800 and preferably from 20 to 200. Their diameter is between 5 and 25 μm, preferably between 11 and 19 μm.

Generally, the fibers are sized with adhesion promoting agents based on organofunctional silanes able to give a good interface bond with the polymer matrix.

If the reinforcing structure consists of continuous filaments, they are deposited by means of a roll system, on the surface of the conveyor in such a manner as to obtain a helicoidal structure having a good isotropy in the plane.

When chopped multi-filaments are used, they are arranged and superimposed freely and randomly among them to obtain a glass like carpet perfectly randomly arranged in all directions of the plane. In this case the multi-filaments are generally linear in length or show minimum bending radius, generally higher than 20 cm.

Any thermoplastic polymer may be used in the process of the present invention, for example, polyester resins such as polyethyleneterephthalate and polybutyleneterephthalate; Olefinic resins, for example, polyethylene and polypropylene; vinyl resins such as polyvinylchloride, polyamide resins etc. Preferred polymers are resins having a low viscosity and good thermooxidative resistance such as polyethyleneterephthalate or polybutyleneterephthalate or, more generally, polyester resins.

The polymer matrix fed together (but separately) with the fiber is in the form of granules, preferably cylindrical granules. Their size is very important since, also in solid state, a good penetration of the matrix in the interspaces of the reinforcing structure should be achieved. Height or diameter vary from 2 to 10 mm, preferably, the optimum size is from 2 to 4 mm.

According to the process of the present invention it is possible to use inorganic fillers, dyeing agents and similar additives in the desired amounts for preparing the thermo-mouldable, thermoplastic composite materials.

For instance, when slabs showing very smooth surfaces and improved flexural strength and/or flexural modulus are desired, it may be useful to disperse in the matrix short fibers of the same nature as the reinforcing structure which reinforce the resin in the spaces not filled by the reinforcing structure.

Generally, these short fibers represent from 5 to 30% by weight of the composite material, preferably from 5 to 15%. Usually, the short fibers contained in the polymer matrix have a length ranging from 30 to 1000 μm, preferably from 50 to 400 μm.

The additives, such as the inorganic fillers, short fibers, pigments etc., may haVe been previously incorporated into the polymer matrix, in which case the filler and the polymer are pre-blended and, thereafter, separately extruded to obtain granules having the desired size and then they are uniformly fed according to the requirements of the process.

For a better understanding of the process of the present invention a more detailed description is given below with reference to the drawing, which is a schematic illustration of a device suitable for carrying out the process of the present invention and which comprises two polymer fiber distribution zones.

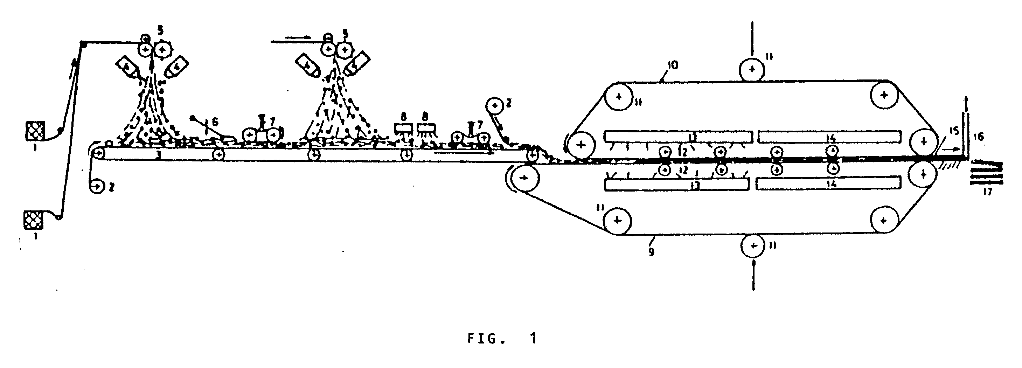

With reference to Fig. 1, the device comprises a conveyor belt (3) above which, at a suitable height, cylinders for cutting the fibers (5) are placed together with the distribution devices for the granules (4).

Both the cutting cylinders (5) and the granule distributors (4) are arranged in such a manner as to cover the complete width of the desired final slab (15) to be produced.

Near the belt a beating apparatus (6), two compressors (7) to compact and reduce the thickness of the fiber/polymer composite material as well as an infrared ray system (8) for pre-heating are provided.

At the side of the conveyor belt (3), on the same plane or on a slightly lower plane, a heat-pressing system is provided which comprises two belts (9) and (10), driven by cylinders (11) and (12), a heating zone (13) and a cooling zone (14). A system for cutting the slab (16) is provided at the outlet of the cooling zone.

The glass fibers coming from the cops or rovings (1) are fed to the cutter (5) and the chopped multi-filaments, while falling from the cutter onto the conveyor belt (3), are mixed with the granules of the polymer coming from the distributors (4), which may be coupled or operate individually, according to the requirements.

In the case described in Fig. 1, a covering polymer film (2) is inserted between the conveyor belt (3) and the polymer fiber system. If necessary, this element may be replaced by a surface felt feeder which is used to improve the appearance of the slab. The structure, consisting of the reinforcement and of the granules, is beaten at a suitable frequency by means of the beating apparatus (6), which not only improves the dispersion of the fibers in mono-filaments but facilitates the penetration of the granules throughout the thickness of the reinforcement.

The first compressor (7) serves to compress the structure and, thus, significantly reduce the thickness so that a smoother and flatter surface is presented to the second fiber polymer throwing zone.

According to the process schematically shown in the figure, after the second throwing zone an infrared ray system (8) to retain a part of the polymer on the surface and a second compression zone (7) are provided. The temperature on the surface of the slab is preferably set at a little below the melting point of the polymer matrix of the slab.

A second surface covering film (2) may be inserted to improve the appearance of the upper surface of the composite material. After the preceding operations the felt, mixed with the granules, reaches the conveyor belt of the continuous press. The passage may take place on the same plane or on a lower plane.

During the pressing phase under heat, the polymer melts and immediately penetrates into the reinforcing structure. The composite material thus obtained proceeds to the cooling zone (14) and, at the end, the set slab (15) is cut into the desired sizes (17) by means of the cutter (16).

For a better understanding of the invention and in order to illustrate its practical application, examples are given below which, however, do not limit the present invention in any way.

EXAMPLE 1

Slabs of thermoplastic composite material, based on polybutyleneterephthalate reinforced with glass fibers E (30% by weight), are prepared according to the following procedure:

Cops sized with epoxysilanes are used and the strand consists of 4 single 26 tex multi-filaments which, when cut, open singly. Each 26 tex multi-filament consists of 200 filaments having a diameter of about 11.5 $\mu$m. The length of the cut is 7.5 cm.

The intrinsic viscosity of the polymer in phenol/tetrachloroethane (70/30 by weight) is 0.8. The polymer is in the form of cylindrical granules having a diameter of 2.5 mm and a height of 3mm, which were obtained by blending the base polymer in an extruder with organic phosphite and phosphates as stabilizing agents.

48 cops of glass thread are fed to a cutter (5) while 2 vibrating dosage devices (4) feed the polymer, thus, forming a blend consisting of 3120 g/m$^2$ of polymer and 1370 g/m$^2$ of fiber, which deposits on the belt (3) having a speed of about 0.5 m/min.

A film of extruded polymer (2) with a thickness of 150 $\mu$m (1.2% by weight with respect to the total weight of the composite material) has been inserted before the falling zone of the main components.

The soft felt (thickness about 15 cm) is beaten by means of a suitable apparatus (6), which improves penetration of the granules to the lower surface and, thereafter, the felt is compressed to reduce its thickness to about 6 to 7 cm.

A second polymer film (150 μm) is fed onto the upper face of the felt.

The felt, together with the granules, proceeds to the belt of the continuous press which compresses it to about 3 bars. It remains for about 5 minutes in the heating zone, with a final thermal peak of about 250° C, and then is cooled down to a temperature of about 30° C in the second zone.

In this way a composite material in the form of a flat slab is obtained. The slab shows isotropic characteristics along 3 main axes and has a thickness of 3 mm, a width of 70 cm, a density of 1.52 g/cm³, a weight of 4569 g/m² and a weight ratio of polymer matrix to fiber of 70/30.

EXAMPLE 2

Slabs of thermoplastic composite with polyethyleneterephthalate (PET), reinforced with 26% by weight glass fiber type E are prepared. PET in granules, having an intrinsic viscosity in phenol/tetrachloroethane (70/30 by weight) of 0.78, was pre-blended in the extruder with nucleating stabilizers and 5% by weight of short glass fibers, thus obtaining granules of 3 × 4.5 mm and a flat film of about 150 μm. This composite material in granules, having a density of about 1.33 g/cm³ was used as polymeric fraction of the final composite material in slab form. The long glass fiber used as reinforcing element of the system is fed from cops, with strands of about 300 tex consisting of multifilaments, each of 20 tex with filaments of 11.5 μm.

By comparison with example 1, the process is modified by using two zones for the cutting of the fiber and distribution of the polymer. In both zones the mixing ratio was 74 parts by weight of granules (the master batch consisting of 95% polymer and 5% paper fiber) and 26 parts by weight of fiber of 15 cm length, corresponding to 1694 g/m² of granules and 605 g/m² of long fiber.

After the first and second zone of cutting-distribution, the insertion of a number of IR lamps which raised the temperature of the felt to about 255° C was found to be useful. It was also found to be useful to insert two compressors of the felt which contributed to blocking the mixing of the components.

The working pressure in the continuous press was 8 bar, the residence time in the heating zone was 5 minutes and the thermal peak 280° C. The manufacturing speed was 0.5 m/min and the final temperature of the slab 35° C.

Finished slabs were obtained having a width of 70 cm, a thickness of 3 mm. The theoretical density of the composite material was 1.53 g/cm³.

EXAMPLE 3

The components were the same as those of example 2.

The surface of the granule/fiber mixed felt was covered with two polymer films containing 5% by weight of short fibers.

During the continuous distribution of the components on two zones the IR lamps for the preheating were removed and were replaced by two beating apparatus.

The qualitative results with regard to the distribution of the polymer and the surface appearance showed an improvement by comparison with example 2.

## Claims

1. A process for the continuous manufacture of thermomoldable thermoplastic composite materials which comprises:
   a) simultaneously and separately feeding onto a conveyor belt a thermoplastic polymer in the form of granules having a height or diameter of from 2 to 10 mm and a reinforcement selected from organic or inorganic fibers to obtain a continuous felt;
   b) beating and/or compressing the thus obtained continuous felt to reduce its thickness;
   c) compressing and heating under pressure the continuous felt gradually up to melt the polymer matrix; and
   d) cooling the system thus obtained under pressure.

2. A process according to claim 1, which comprises feeding, before steps (a) and/or (c), respectively on the conveyor belt and/or on the compacted structure, a film of the same type of polymer.

3. A process according to claim 1 or 2, which comprises preheating the composite structure before step (b).

4. A process according to any of the preceding claims, wherein the fiber is a glass fiber, a rock fiber, a carbon fiber or aramide fiber.

5. A process according to any of the preceding claims, wherein the fiber is a continuous fiber or has a length of more than 1 cm, preferably between 5 and 25 cm.

6.  A process according to claim 5, wherein the cut fibers are fed in free-falling form from a height of more than 80 cm onto the conveyor belt.

7.  A process according to any of the preceding claims, wherein the polymer is selected from polyester, olefin, vinyl and polyamide resins.

8.  A process according to claim 7, wherein the polymer is polyethyleneterephthalate or polybutyleneterephthalate.

9.  A process according to any of the preceding claims, wherein, in step (c), the working temperature is at least 30 to 50°C higher than the melting temperature of the polymer.

10. A process according to any of the preceding claims, wherein the fibers comprise from 10 to 60% of the total weight of the composite material.

11. A process according to any of the preceding claims, wherein the granulated thermoplastic polymer contains inorganic fillers, dyestuffs or other additives.


## Revendications

1.  Un procédé de fabrication en continu de matériaux composites thermoplastiques thermomoulables qui comprend les étapes suivantes:
    (a) on introduit simultanêment et séparément un polymère thermoplastique sous forme de granulés dont la hauteur ou le diamètre est compris entre 2 et 10 mm et un matériau de renforcement choisi parmi les fibres organiques ou minérales sur une courroie transporteuse pour obtenir un feutre continu;
    (b) on bat et/ou on presse le feutre continu ainsi obtenu pour réduire son épaisseur;
    (c) on comprime et on chauffe progressivement sous pression le feutre continu pour fondre la matrice polymère; et
    (d) on refroidit, sous pression, le système ainsi obtenu.

2.  Un procédé selon la revendication 1, caractérisé en ce que, avant les étapes (a) et/ou (c) respectivement, on introduit sur la courroie transporteuse et/ou sur la structure compactée, un film formé du même type de polymère.

3.  Un procédé selon la revendication 1 ou 2, caractérisé en ce que l'on préchauffe la structure composite avant l'étape (b).

4.  Un procédé selon l'une quelconque des revendications précédentes, caractérisé en ce que la fibre est une fibre de verre, une fibre de rochè, une fibre de carbone ou une fibre aramide.

5.  Un procédé selon l'une quelconque des revendications précédentes, caractérisé en ce que la fibre est une fibre continue ou en ce que sa longueur est supérieure à 1 cm, de préférence comprise entre 5 et 25 cm.

6.  Un procédé selon la revendications 5, caractérisé en ce que les fibres coupées sont amenées sur la courroie transporteuse en chute libre à partir d'une hauteur supérieure à 80 cm.

7.  Un procédé selon l'une quelconque des revendications précédentes, caractérisé en ce que le polymère est choisi dans le groupe comprenant les résines polyamides, vinylíques, oléfiniques, et polyesters.

8.  Un procédé selon la revendication 7, caractérisé en ce que le polymère est le polyéthylènetéréphtalate ou le polybutylènetéréphtalate.

9.  Un procédé selon l'une quelconque des revendications précédentes, caractérisé en ce que, dans l'étape (c), la température de fonctionnement est d'au moins 30 à 50°c supérieure à la température de fusion du polymère.

10. Un procédé selon l'une quelconque des revendications précédentes, caractérisé en ce que les fibres constituent de 10 à 60% du poids total du matériau composite.

11. Un procédé selon l'une quelconque des revendications précédentes, caractérisé en ce que le polymère thermoplastique granulé contient des charges minérales, des colorants ou d'autres additifs.


## Ansprüche

1.  Verfahren zur kontinuierlichen Herstellung von thermisch formbaren, thermoplastischen Verbundmaterialien, umfassend:
    a) das gleichzeitige und getrennte Beschicken eines Förderbands mit einem thermoplastischen Polymer in Form von Granulat mit einer Höhe oder einem Durchmesser von 2 bis 10 mm, und mit einem aus organischen oder anorganischen Fasern ausgewählten Verstärkungsmaterial, um einen Endlosfilz zu erhalten;

b) das Schlagen und/oder Komprimieren des so erhaltenen Endlosfilzes, um seine Dicke zu verringern;

c) das Komprimieren und das allmähliche Aufheizen des Endlosfilzes unter Druck, um die Polymermatrix zu schmelzen; und

d) das Kühlen des so erhaltenen Systems unter Druck.

2. Verfahren nach Anspruch 1, umfassend das Versehen des Förderbands und/oder der verdichteten Struktur mit einem Film desselben Polymertyps vor den Schritten (a) und/oder (c).

3. Verfahren nach Anspruch 1 oder 2, umfassend das Vorheizen der Verbundstruktur vor dem Schritt (b).

4. Verfahren nach irgendeinem der vorhergehenden Ansprüche, worin die Faser eine Glasfaser, Steinfaser, Kohlenstoffaser oder Aramidfaser ist.

5. Verfahren nach irgendeinem der vorhergehenden Ansprüche, worin die Faser eine Endlosfaser ist, oder eine Länge von mehr als 1 cm, vorzugsweise zwischen 5 und 25 cm, aufweist.

6. Verfahren nach Anspruch 5, worin die geschnittenen Fasern dem Förderband aus einer Höhe von mehr als 80 cm in freiem Fall zugeführt werden.

7. Verfahren nach irgendeinem der vorhergehenden Ansprüche, worin das Polymer aus Polyester-, Olefin-, Vinyl- und Polyamidharzen ausgewählt ist.

8. Verfahren nach Anspruch 7, worin das Polymer Polyethylenterephthalat oder Polybutylenterephthalat ist.

9. Verfahren nach irgendeinem der vorhergehenden Ansprüche, worin die Arbeitstemperatur in Schritt (c) mindestens 30 bis 50°C höher als die Schmelztemperatur des Polymers ist.

10. Verfahren nach irgendeinem der vorhergehenden Ansprüche, worin die Fasern 10 bis 60% des Gesamtgewichts des Verbundmaterials umfassen.

11. Verfahren nach irgendeinem der vorhergehenden Ansprüche, worin das granulierte thermoplastische Polymer anorganische Füllstoffe, Färbemittel oder andere Zusätze enthält.

FIG. 1